# EUROPEAN PATENT SPECIFICATION

(11) **EP 2 644 856 B1**
(45) Date of publication and mention of the grant of the patent: **12.07.2017**
(21) Application number: 13160421.7
(22) Date of filing: 21.03.2013
(51) Int. Cl.: F01M 13/02, F02M 35/10, F02M 35/16, F02M 35/06, F02M 35/02

(54) **Saddle-type vehicle**
Fahrzeug mit Sattel
Véhicule avec une selle

(30) Priority: 28.03.2012 JP 2012074084; 05.12.2012 JP 2012266051
(43) Date of publication of application: 02.10.2013
(73) Proprietor: Yamaha Hatsudoki Kabushiki Kaisha, Iwata-shi, Shizuoka-ken 438-8501 (JP)
(72) Inventor: Ishida, Yousuke, Shizuoka-ken, 438-8501 (JP); Matsumoto, Soichiro, Shizuoka-ken, 438-8501 (JP)
(74) Representative: Zimmermann, Tankred Klaus

(56) References cited:
- EP-A1- 2 292 906
- EP-A1- 2 330 277
- JP-A- 2007 146 773
- JP-U- S4 984 541
- JP-U- S5 757 213
- JP-U- S6 163 409
- US-A1- 2003 226 553

## Description

### Technical Field

The present invention relates to a saddle-type vehicle.

### Background Art

In a saddle-type vehicle such as a motorcycle or the like, a part of fuel transported to a combustion chamber of an engine may not combusted and flow into a crankcase after passing between a cylinder and a piston. Such fuel is mixed with high-temperature oil in the crankcase and thus is vaporized. The vaporized gas (hereinafter, referred to as "blow by gas") contains oil in a state of microparticles. The fuel contained in the blow-by gas is separated from the oil, then is returned to an intake path, and is supplied to the combustion chamber of the engine again.

JP 2011-38505 A describes a catch tank for separating the oil from the blow-by gas. The catch tank is located in the vicinity of an air cleaner. The catch tan k is connected to a cylinder section of an engine via a first hose and is also connected to the air cleaner via a second hose. The blow-by gas flows into the catch tank from the cylinder section of the engine via the first hose. A part of the fuel contained in the blow-by gas is liquefied in the catch tank. The rest of the fuel contained in the blow-by gas is separated from the liquefied fuel and the oil, and flows into the air cleaner from the catch tank via the second hose. The fuel which has flown into the air cleaner is supplied to a combustion chamber of the engine together with air in the air cleaner.

JP 2007 146773 A describes a blow-by gas ventilator for an internal combustion engine constituted such that a fresh air lead-in pipe for leading clean air from an air cleaner is connected to an engine body to supply clean air into the engine body in order to ventilate blow-by gas generated in the crankcase of the engine body. In this case, a blow-by gas lead-out line leading blow-by gas flowing with clean air supplied into the engine body is connected to an exhaust port of the engine body.

US 2003/0226553 A1 describes blow-by gas processing system including a breather tube extended from a breather port of an engine and connected to a connecting tube. A breather tube inside which an intake passage connecting a carburetor and an air cleaner is formed and an expanded part provided with a gas-liquid separating chamber adjacent to the intake passage are provided. An entrance joint connecting a lower part of the gas-liquid separating chamber to the breather tube is integrated on one side of the connecting tube and a blow-by gas exit communicating the upside of the gas-liquid separating chamber with the intake passage is provided in a partition between the gas-liquid separating chamber and the intake passage. The system is a low cost system having a simplified design enabling oil to be separated from blow-by gas without having to include a special oil separator tank before the breather tube.

JP S49-84541U also describes a blow-by processing system.

### Summary of Invention

It is an object of the present invention to provide a saddle-type vehicle capable of reducing the capacity of the catch tank while keeping the level of performance of the engine high.

This object is achieved by a saddle-type vehicle according to claim 1.

The invention is based on the following findings. Recently, there are cases where fuel containing alcohol is used as fuel for a saddle-type vehicle. Alcohol has a low boiling point and thus is easily vaporized. The range of the boiling point of alcohol is narrower than the range of the boiling point of gasoline. For example, the boiling point of gasoline is about 30°C to 200°C, whereas the boiling point of ethanol, which is an example of alcohol, is about 78°C to 80°C. Alcohol has a property of vaporizing at once when the temperature thereof reaches the boiling point. Thus, in the motorcycle described in JP 2011-38505 A, the capacity of the catch tank need to be made large so that a large amount of vaporized alcohol can be liquefied in the catch tank. In this motorcycle, a part of the vaporized alcohol is liquefied in the catch tank and thus is separated from the blow-by gas. This suppresses a large amount of alcohol from returning to the combustion chamber of the engine at the same time. Therefore, the air-to-fuel ratio of the mixed gas supplied to the engine is suppressed from being significantly deviated from the target value, and thus the level of performance of the engine can be kept high.

However, it is preferable that the capacity of the catch tank is small. This can further reduce the size of the saddle-type vehicle or provide a space for other components of the vehicle.

A saddle-type vehicle according to the present invention includes an engine; an intake path connected to the engine; an air cleaner connected to the intake path; a tank provided in the air cleaner and having a hole formed therein; and a blow-by gas path having an entrance connected to the engine and an exit connected to the tank, and allowing blow-by gas containing fuel and oil to flow therein. The blow-by gas path is exposed to outside air; and the exit is located at a lower position than that of the entrance.

In the saddle-type vehicle according to the present invention, the blow-by gas is cooled by the outside air when passing the blow-by gas path. Therefore, at least a part of the blow-by gas is liquefied. Since the exit of the blow-by gas path is located at a lower position than that of the entrance, the liquefied fuel is easily guided to the exit by the force of gravity. The blow-by gas and the liquefied fuel flow into the tank in the air cleaner and are separated from each other in the tank. After the separation, the blow-by gas flows into the air cleaner via the hole formed in the tank, and is supplied to the intake path together with the air in the air cleaner. In the above-described saddle-type vehicle, since the blow-by gas can be liquefied in the blow-by gas path and the tank, the engine can be prevented from being supplied with a large amount of blow-by gas at the same time. Therefore, the air-to-fuel ratio of the mixed gas supplied to the engine is suppressed from being significantly deviated from the target value, and thus the level of performance of the engine can be kept high. In addition, in the above-described saddle-type vehicle, at least a part of the blow-by gas is liquefied before flowing into the tank. Therefore, it is not necessary to liquefy a large amount of blow-by gas in the tank, which allows the capacity of the tank to be reduced.

According to one embodiment of the present invention, the engine includes a crankcase and a cylinder section located above the crankcase; the air cleaner is located rearward to the cylinder section; the entrance of the blow-by gas path is connected to the cylinder section; and at least a part of the blow-by gas path is located forward to the air cleaner.

Since at least a part of the blow-by gas path is located forward to the air cleaner as described above, while the saddle-type vehicle is running, air coming from the front hits at least a part of the blow-by gas path without being blocked by the air cleaner. This makes it easier to liquefy the blow-by gas in the blow-by gas path.

According to one embodiment of the present invention, the exit is formed at a bottom end of the blow-by gas path.

When the exit of the blow-by gas path is located at the bottom end thereof as described above, the fuel liquefied in the blow-by gas path easily flows toward the exit. Therefore, the liquefied fuel can be smoothly guided to the tank.

According to one embodiment of the present invention, the blow-by gas path includes a vertical portion extending in a vertical direction.

When the blow-by gas path includes the vertical portion as described above, the liquefied fuel easily flows toward the exit via the vertical portion. Therefore, the liquefied fuel can be smoothly guided to the tank.

According to one embodiment of the present invention, the intake path includes a throttle body having a throttle valve built therein; the entrance is located at a higher position than that of a top end of the throttle body; and the exit is located at a lower position than that of a bottom end of the throttle body.

In this structure, since the level difference between the entrance and the exit of the blow-by gas path is large, the fuel liquefied in the blow-by gas path easily flows toward the exit. Therefore, the liquefied fuel can be smoothly guided to the tank.

According to one embodiment of the present invention, the air cleaner has a front wall; and a part of the tank is defined by the front wall.

The front portion of the air cleaner is hit by the air coming from the front while the saddle-type vehicle is running, and therefore is more easily cooled than the rear portion. Thus, by forming the tank in the front portion of the air cleaner, the blow-by gas is more easily liquefied in the tank.

According to one embodiment of the present invention, the air cleaner has a connection opening formed therein, the connection opening being connected to the intake path; and the tank is formed below the connection opening.

In this structure, since the tank is provided at a relatively low position in the air cleaner, the fuel liquefied in the blow-by gas path easily flows into the tank. In addition, the blow-by gas which has flown into the tank easily flows into the air cleaner via the hole without being blocked by the liquefied fuel and then flows into the intake path via the connection opening.

According to one embodiment of the present invention, the hole of the tank is formed above the exit.

In this structure, the blow-by gas which has flown into the tank easily flows into the air cleaner via the hole without being blocked by the liquefied fuel.

According to one embodiment of the present invention, the tank has a length in a vertical direction longer than the length thereof in a front-rear direction.

In this structure, since the tank is longer in the vertical direction, the blow-by gas and the liquefied fuel are easily separated from each other in the tank.

According to one embodiment of the present invention, the air cleaner includes a front portion and a rear portion having a larger width than that of the front portion; and the tank is formed in the front portion.

Since the capacity of the tank can be relatively small, the tank can be formed in the front portion, which has a relatively small width among the portions of the air cleaner. In addition, since the air cleaner has the rear portion having a large width, the air cleaner can have a sufficient capacity with certainty.

According to one embodiment of the present invention, a frame member is located at a position which is lateral to the front portion and forward to the rear portion; and a part of the blow-by gas path is located forward to the frame member.

Owing to this, air coming from the front easily hits a part of the blow-by gas path without being blocked by the frame member.

According to one embodiment of the present invention, the blow-by gas path includes a vertical portion extending in a vertical direction; and the vertical portion is located forward to, or obliquely forward to, the frame member.

Owing to this, air coming from the front easily hits the vertical portion of the blow-by gas path without being blocked by the frame member. Therefore, the blow-by gas is easily liquefied in the vertical portion. The liquefied fuel smoothly flows into the tank via the vertical portion.

According to one embodiment of the present invention, as seen in a plan view of the saddle-type vehicle, the blow-by gas path extends rearward from the engine and then is bent in a lateral direction in front of the frame member.

Owing to this, the blow-by gas path can have a sufficient length with certainty, and air easily hits the blow-by gas path. Therefore, the blow-by gas is easily liquefied in the blow-by gas path.

According to one embodiment of the present invention, the fuel contains alcohol.

Fuel containing alcohol (fuel partially or entirely formed of alcohol) has a property of vaporizing at once when the temperature thereof reaches a certain temperature. Therefore, the above-described effect is exerted more effectively.

According to one embodiment of the present invention, the air cleaner includes a case having the tank built therein; an element, located rearward to the tank, for partitioning the inside of the case into a first chamber and a second chamber; an air intake opening, formed in the first chamber of the case, for sucking air outside the air cleaner into the first chamber; and a connection opening formed in the second chamber of the case and connected to the intake path. An inner wall of the case is provided with a projection located between the tank and the element, located at a lower position than that of the connection opening, and extending in a width direction of the saddle-type vehicle.

In this structure, since the inner wall of the case is provided with the projection extending in the width direction of the vehicle, even when the liquefied fuel or the like flows into the case from the tank, the fuel or the like can be prevented from contacting the element or the like.

According to one embodiment of the present invention, at least a part of the projection is located below a bottom end of the element.

Owing to this, even when the liquefied fuel or the like flows into the case from the tank, the fuel or the like can be prevented from contacting the element or the like more effectively.

According to one embodiment of the present invention, the projection is formed to project obliquely forward and upward from the inner wall of the case.

Owing to this, even when the liquefied fuel or the like flows into the case from the tank, the fuel or the like can be prevented from contacting the element or the like more effectively.

According to one embodiment of the present invention, a front end of the projection is formed to project downward.

Owing to this, even when the liquefied fuel or the like flows into the case from the tank, the fuel or the like can be prevented from contacting the element or the like more effectively.

### Advantageous Effect of Invention

According to the present invention, a saddle-type vehicle capable of reducing the capacity of the catch tank while keeping the level of performance of the engine high can be provided.

### Brief Description of Drawings

FIG. 1 is a side view of a motorcycle in one embodiment according to the present invention.
FIG. 2 is a cross-sectional view of an engine showing the inside thereof in the embodiment according to the present invention.
FIG. 3 is a side view showing an internal structure of the motorcycle in the embodiment according to the present invention.
FIG. 4 is a side view showing a structure of a blow-by gas path and members in the vicinity thereof in the embodiment according to the present invention.
FIG. 5 is a plan view with a partial cross-sectional view showing a structure of the blow-by gas path and members in the vicinity thereof in an example.
FIG. 6 is a cross-sectional view of FIG. 5 taken along line VI-VI in FIG. 5 and shows an air cleaner and an intake path in an example.
FIG. 7 is a front view of a breather hose in the embodiment according to the present invention.
FIG. 8 is a left side view of the breather hose in the embodiment according to the present invention.
FIG. 9 is a plan view with a partial cross-sectional view showing a structure of a blow-by gas path and members in the vicinity thereof in another embodiment according to the present invention.
FIG. 10 is a cross-sectional view of FIG. 9 taken along line X-X in FIG. 9 and shows an air cleaner and an intake path in the another embodiment according to the present invention.

### Description of Embodiments

### (First Embodiment)

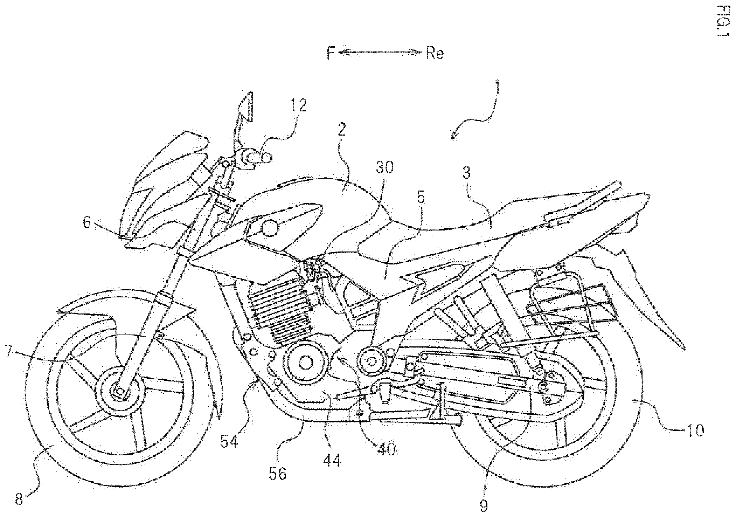

Hereinafter, an embodiment of the present invention will be described. As shown in FIG. 1, a saddle-type vehicle in this embodiment is a motorcycle 1. The motorcycle 1 is not limited to any type, and may be of a so-called scooter type, moped type, off-road type, on-road type or the like. A saddle-type vehicle according to the present invention is not limited to a motorcycle, and may be an ATV (All Terrain Vehicle) or the like. The "saddle-type vehicle" refers to a vehicle which a rider rides astride.

The motorcycle 1 can use, as fuel, gasoline, alcohol such as ethanol or the like, or mixed fuel containing a mixture of gasoline and alcohol. In this embodiment, fuel containing alcohol is used.

In the following description, the terms "front", "rear", "left" and "right" respectively mean front, rear, left and right as seen from a rider of the motorcycle 1. In the figures, F, Re, L and R respectively indicate front, rear, left and right.

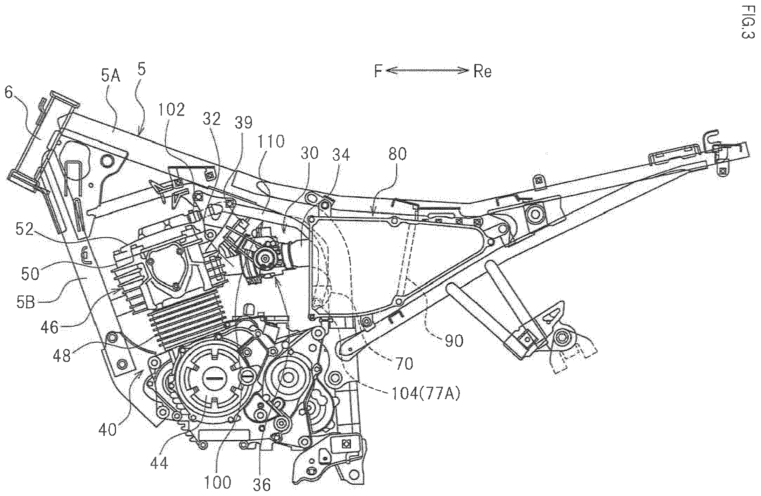

As shown in FIG. 1, the motorcycle 1 includes a fuel tank 2, a seat 3, an engine 40 as a combustion engine, and a body frame 5 for supporting these members. Forward to the body frame 5, a head pipe 6 is provided. The head pipe 6 supports a steering shaft (not shown), and a handle 12 is provided on the steering shaft. Below the steering shaft, a front fork 7 is provided. At a bottom end of the front fork 7, a front wheel 8 is rotatably supported. A swing arm 9 is swingably supported by the body frame 5, and a rear wheel 10 is rotatably supported by a rear end of the swing arm 9. As shown in FIG. 3, the body frame 5 includes an upper main frame member 5A and a lower main frame member 5B extending from the head pipe 6 obliquely rearward and downward.

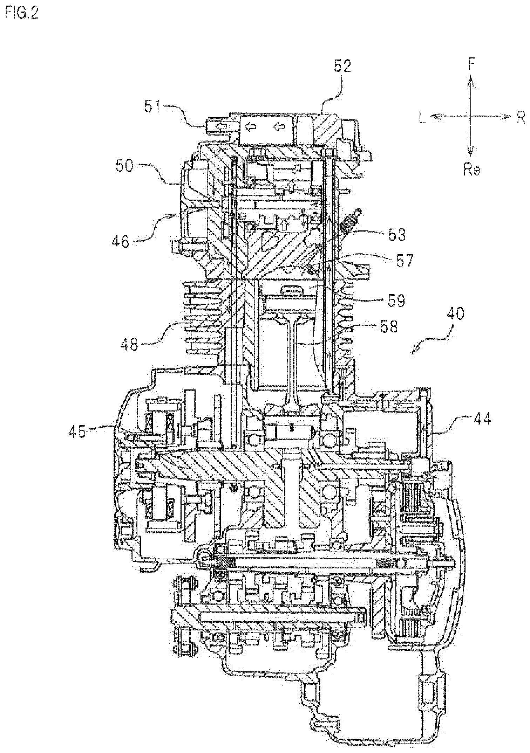

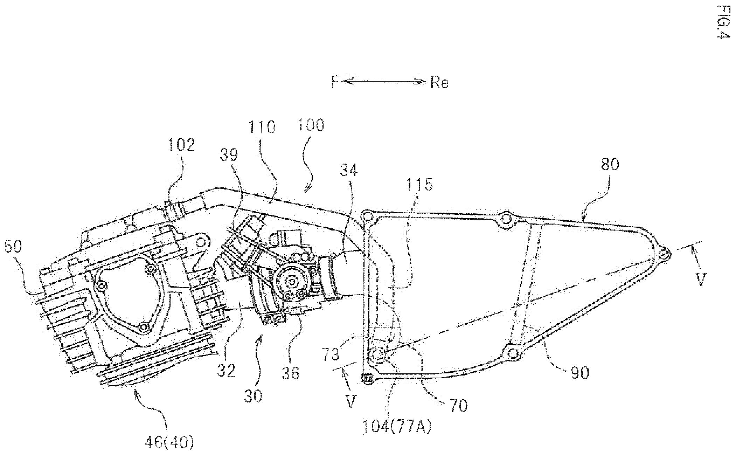

As shown in FIG. 3, the engine 40 includes a crankcase 44, a cylinder block 48 obliquely forward and upward extending from the crankcase 44, a cylinder head 50 connected to a top portion of the cylinder block 48, and a cylinder head cover 52 connected to a top portion of the cylinder head 50. In this specification, an assembly of the cylinder block 48, the cylinder head 50 and the cylinder head cover 52 will be referred to as a "cylinder section 46". The cylinder section 46 extends obliquely forward and upward from the crankcase 44. As shown in FIG. 2, the cylinder head cover 52 has a discharge opening 51 for discharging blow-by gas flowing in the crankcase 44 and the cylinder section 46 to the outside. The discharge opening 51 is connected to an entrance 102 (see FIG. 4) of a blow-by gas path 100 described later.

The cylinder head 50 has a recessed portion 53 and an intake port (not shown) and an exhaust port (not shown) connected to the recessed portion 53. The intake port is connected to an intake path 30 (see FIG. 1), and the exhaust port is connected to an exhaust path 54 (see FIG. 1). The exhaust path 54 includes an exhaust pipe 56 (see FIG. 1) and a muffler (not shown). A combustion chamber 57 is formed of a top surface of a piston 59, an inner circumferential wall of the cylinder block 48, and the recessed portion 53. The piston 59 is coupled to a crankshaft 45 via a connection rod 58. The crankshaft 45 extends leftward and rightward and is accommodated in the crankcase 44. The crankcase 44 stores oil for lubrication. The oil is transported by an oil pump (not shown) and is circulated in the engine 40.

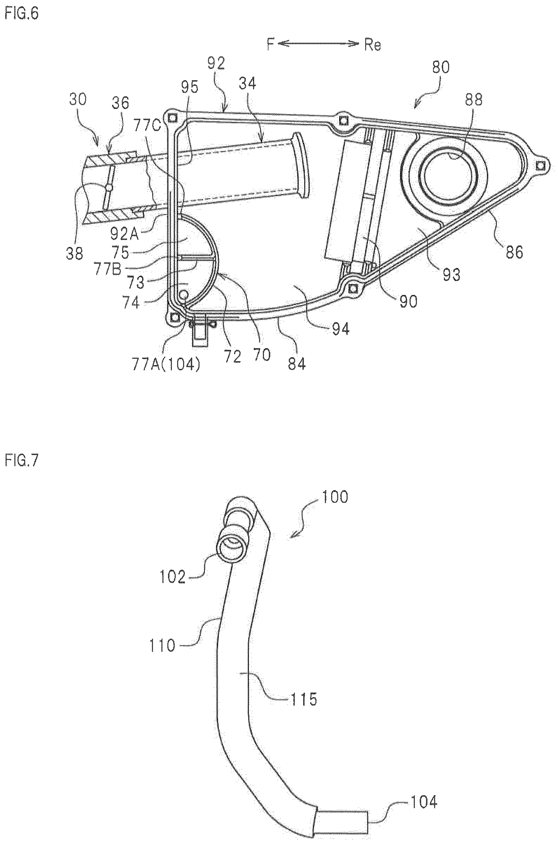

As shown in FIG. 3, the engine 40 is connected to the intake path 30. The intake path 30 is connected to an air cleaner 80. The intake path 30 includes a first intake pipe 32, a throttle body 36, and a second intake pipe 34. The first intake pipe 32 connects the engine 40 and the throttle body 36 to each other. The throttle body 36 is connected to the cylinder head 50 of the engine 40. The throttle body 36 has a throttle valve 38 (see FIG. 6) built therein. An amount of air intake of the engine 40 is adjusted by a change in the degree of opening of the throttle valve 38. The air flows in the air cleaner 80, the second intake pipe 34, the throttle body 36, the first intake pipe 32, and the engine 40 in this order. The first intake pipe 32 is provided with an injector 39 for injecting fuel. The injector 39 is connected to the fuel tank 2 (see FIG. 1) via a fuel supply hose (not shown). The injector 39 is located in the intake path 30, more specifically, between the throttle valve 38 and the engine 40. The second intake pipe 34 connects the throttle body 36 and the air cleaner 80 to each other. The intake path 30 is not limited to being formed of a combination of a plurality of members and may be formed of a single member.

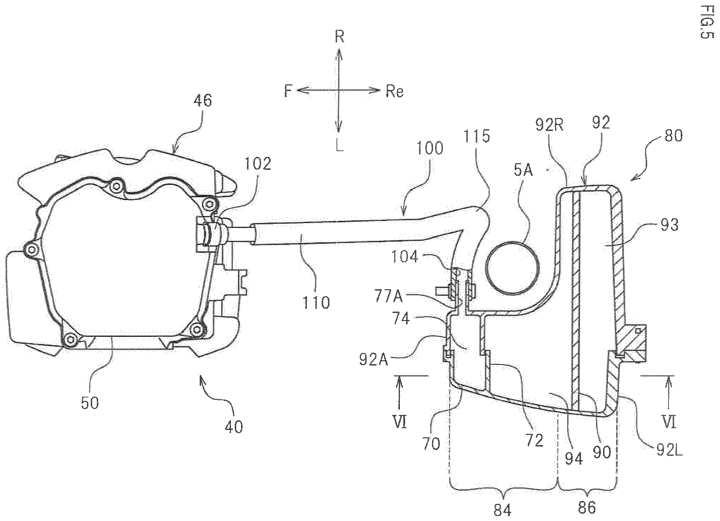

As shown in FIG. 3, the air cleaner 80 is provided at an upstream position with respect to the intake path 30 in the direction of flow of the air. The air cleaner 80 and the engine 40 are located in a serial manner in a front-rear direction, such that the air cleaner 80 is located rearward to the cylinder section 46. As shown in FIG. 5, the air cleaner 80 includes a front portion 84, and a rear portion 86 longer than the front portion 84 in a width direction of the vehicle. The length in the left-right direction of the rear portion 86 is longer than that of the front portion 84. The upper main frame member 5A is located at a position which is lateral to the front portion 84 of the air cleaner 80 and is forward to the rear portion 86.

As shown in FIG. 6, the air cleaner 80 includes an air intake opening 88, an element 90, and a case 92. The element 90 is located in the case 92, and purifies the air passing the element 90. The element 90 partitions the inside of the case 92 into a first chamber 93 and a second chamber 94. In this embodiment, as shown in FIG. 5, the element 90 is located in the rear portion 86 in the case 92. Alternatively, the element 90 may be located at the border between the front portion 84 and the rear portion 86, located as bridging over the border, or located in the front portion 84. The element 90 may be a wet element soaked with oil, or a dry element with no oil.

The air intake opening 88 is formed in the first chamber 93 of the case 92. Air outside the air cleaner 80 flows into the air cleaner 80 via the air intake opening 88. The air outside the air cleaner 80 is sucked into the first chamber 93 via the air intake opening 88. The second chamber 94 of the case 92 has a connection opening 95 connected to the intake path 30. To the connection opening 95, the second intake pipe 34 is attached, and the second intake pipe 34 is connected to the throttle body 36. The outside air flows into the first chamber 93 of the case 92 via the air intake opening 88. The air which has flown into the first chamber 93 flows into the second chamber 94 after being purified when passing the element 90, and is supplied to the engine 40 via the second intake pipe 34.

As shown in FIG. 6, in the front portion 84 of the air cleaner 80, a catch tank 70 is formed. The catch tank 70 is a separation device for separating the fuel (alcohol) liquefied in the blow-by gas path 100 and the blow-by gas from each other. The catch tank 70 has an inner space defined by a front wall 92A of the case 92 and an inner wall 72 provided in the front portion 84. The catch tank 70 has a length in a vertical direction (up-down direction in FIG. 6) which is longer than the length thereof in the front-rear direction (left-right direction in FIG. 6). In this embodiment, the catch tank 70 has a semicircular vertical cross-section. The cross-section of the catch tank 70 is not limited to having such a shape, and may be circular, rectangular or the like. As shown in FIG. 5, the case 92 of the air cleaner 80 is formed by assembling a left case 92L and a right case 92R. The catch tank 70 is formed by assembling a part of the left case 92L and a part of the right case 92R. In the case where the catch tank 70 is formed by assembling two members in this manner, the vertical cross-section of the catch tank 70 is preferably semicircular or circular in consideration of sealability. A reason for this is that if the members have a pointed part, it is difficult to assemble the members closely. The catch tank 70 is formed in a front part of the front portion 84. As shown in FIG. 6, it is preferable that the catch tank 70 is formed below the connection opening 95. The position of the catch tank 70 is not specifically limited as long as being in the air cleaner 80, but is preferably downstream with respect to the element 90.

The catch tank 70 has a partition wall 73 formed therein. The partition wall 73 divides the inside of the catch tank 70 into a first catch chamber 74 and a second catch chamber 75. In the first catch chamber 74, a first air hole 77A is formed and is connected to an exit 104 of the blow-by gas path 100. In the partition wall 73, a second air hole 77B is formed for communicating the first catch chamber 74 and the second catch chamber 75 to each other. In the second catch chamber 75, a third air hole 77C is formed for communicating the second catch chamber 75 and the second chamber 94 to each other. The third air hole 77C is formed above the first air hole 77A. The first air hole 77A is formed at a lower position in the first catch chamber 74, but the position thereof is not limited to this. For example, the first air hole 77A may be formed at an upper position in the first catch chamber 74, so that the blow-by gas and the liquefied fuel can be separated from each other more effectively.

In this embodiment, the catch tank 70 includes the first catch chamber 74 and the second catch chamber 75. The catch tank 70 is not limited to including a plurality of catch chambers, and may include one catch chamber. The first catch chamber 74 and the second catch chamber 75 may have approximately the same capacity, or the capacity of one of the catch chambers may be larger than the capacity of the other catch chamber. For example, the capacity of the first catch chamber 74 may be larger than the capacity of the second catch chamber 75. In this case, the liquefied fuel can be vaporized more effectively.

A part of FIG. 5 is a cross-sectional view of FIG. 4 taken along line V-V in FIG 4. As shown in FIG. 5, the blow-by gas path 100 in which the blow-by gas containing the fuel and the oil flows is connected to the engine 40 and the air cleaner 80. The blow-by gas path 100 is partially in a breather hose 110. The breather hose 110 is connected to the catch tank 70. The blow-by gas path 100 has the entrance 102 connected to the cylinder section 46 of the engine 40. Specifically, the entrance 102 is connected to the discharge opening 51 (see FIG. 2) formed in the cylinder head cover 52. The blow-by gas path 100 has the exit 104 connected to the catch tank 70 provided in the air cleaner 80. Specifically, the exit 104 is connected to the first air hole 77A in the first catch chamber 74. Since the breather hose 110 is exposed to the outside air, the blow-by gas flowing in the breather hose 110 can be easily cooled by the outside air. In the case where, for example, the fuel contains ethanol, the breather hose 110 may be a rubber hose having a fluorine film formed on an inner surface thereof so as not to be corroded by ethanol. Alternatively, the breather hose 110 may be optionally a metal pipe formed of aluminum, copper, stainless steel or the like in order to improve the cooling effect in the part of the blow-by gas path 100 which is in the breather hose 110.

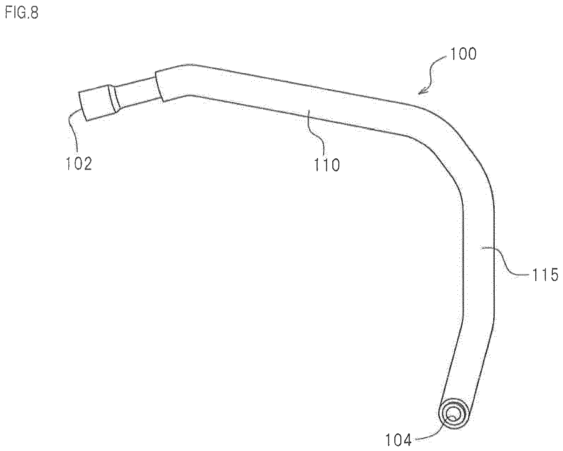

As shown in FIG. 5, as seen in a plan view of the vehicle, the blow-by gas path 100 first extends rearward (rightward in FIG. 5) from the engine 40 and then is bent in a lateral direction (downward in FIG. 5) in front of the upper main frame member 5A. As shown in FIG. 7 and FIG. 8, the blow-by gas path 100 has a vertical portion 115 extending in the vertical direction. The exit 104 of the blow-by gas path 100 is formed at a bottom end of the blow-by gas path 100.

As shown in FIG. 4, the exit 104 of the blow-by gas path 100 is located at a lower position than that of the entrance 102. The entrance 102 is located at a higher position than that of a top end of the throttle body 36. The exit 104 is located at a lower position than that of a bottom end of the throttle body 36. Herein, in the state where the throttle body 36 is attached to the engine 40 and the air cleaner 80 via the first intake pipe 32 and the second intake pipe 34, the highest position of the throttle body 36 in the vertical direction is defined as the "top end" of the throttle body 36, and the lowest position of the throttle body 36 in the vertical direction is defined as the "bottom end" of the throttle body 36.

As shown in FIG. 5, at least a part of the blow-by gas path 100 is located forward to the air cleaner 80. The entirety of the blow-by gas path 100 is located forward to the rear portion 86 of the air cleaner 80. The blow-by gas path 100 is located forward to the upper main frame member 5A. The vertical portion 115 is located obliquely forward to the upper main frame member 5A. The vertical portion 115 may be located forward to the upper main frame member 5A.

Now, how to process the blow-by gas in the case where fuel containing ethanol is used in the motorcycle 1 will be described with reference to the figures. Unlike gasoline, ethanol has a narrow range of boiling point. Therefore, ethanol has a property of vaporizing at once when the temperature thereof reaches the boiling point.

As shown in FIG. 2, a part of the fuel transported to the combustion chamber 57 of the engine 40 does not combust and flows into the crankcase 44 after passing between the inner circumferential wall of the cylinder block 48 and the piston 59. The fuel which has flown into the crankcase 44 is mixed into oil for lubrication which is circulating in the crankcase 44. When the engine 40 is driven to raise the temperature of the oil to the boiling point of ethanol, ethanol mixed in the oil vaporizes at once. Especially because the combustion chamber 57 is located in the vicinity of the cylinder head 50, the temperature of the cylinder head 50 is easily raised, and ethanol contained in the oil easily vaporizes. The vaporized ethanol (hereinafter, referred to as "blow-by gas") contains oil in a state of microparticles.

The blow-by gas moves in the crankcase 44 and the cylinder section 46, and flows into the blow-by gas path 100 via the discharge opening 51 provided in the cylinder head cover 52 and the entrance 102 of the blow-by gas path 100. Since the breather hose 110 forming the blow-by gas path 100 is exposed the outside air and is directly hit by the wind, the blow-by gas flowing in the blow-by gas path 100 is indirectly cooled by the outside air. Therefore, at least a part of the blow-by gas is liquefied in the blow-by gas path 100, and the liquefied ethanol is separated from the blow-by gas. For example, the liquefied ethanol condenses in the blow-by gas path. As shown in FIG. 4, the exit 104 of the blow-by gas path 100 is located at a lower position that that of the entrance 102. Therefore, the liquefied ethanol is smoothly guided to the exit 104 by the force of gravity.

As shown in FIG. 6, the blow-by gas and the liquefied ethanol flowing in the blow-by gas path 100 flow into the first catch chamber 74 of the catch tank 70 in the air cleaner 80 and are separated from each other in the catch tank 70. After the separation, a part of the blow-by gas is liquefied in the first catch chamber 74, and another part of the blow-by gas flows into the second catch chamber 75 via the second air hole 77B formed in the catch tank 70. Then, the blow-by gas flows into the second chamber 94 in the air cleaner 80 via the third air hole 77C formed in the catch tank 70.

The blow-by gas which has flown into the air cleaner 80 is supplied to the intake path 30 together with the outside air which has flown via the air intake opening 88. By contrast, the liquefied ethanol which has flown into the first catch chamber 74 is gradually vaporized in the first catch chamber 74. The vaporized ethanol is supplied to the intake path 30 via the third air hole 77C. As can be seen, the first catch chamber 74 can temporarily store the liquefied ethanol. Since the blow-by gas is liquefied in the blow-by gas path 100, it is not necessary to liquefy a large amount of blow-by gas in the first catch chamber 74. This allows the capacity of the first catch chamber 74 to be relatively small. Owing to this, the catch tank 70 can be provided in the air cleaner 80 while the level of purification performance of the air cleaner 80 is maintained and with no need to increase the capacity of the air cleaner 80.

As described above, in the motorcycle 1 in this embodiment, the blow-by gas can be liquefied in the blow-by gas path 100 and the catch tank 70. This can prevent a large amount of blow-by gas from being supplied to the engine 40 at the same time. Therefore, the air-to-fuel ratio of the mixed gas supplied to the engine 40 is suppressed from being significantly deviated from the target value, and thus the level of performance of the engine can be kept high.

As described above, in the motorcycle 1 in this embodiment, the blow-by gas is cooled by the outside air when passing the blow-by gas path 100. Therefore, at least a part of the blow-by gas is liquefied in the blow-by gas path 100. Since the exit 104 of the blow-by gas path 100 is located at a lower position than that of the entrance 102, the liquefied fuel is easily guided to the exit 104 by the force of gravity. The blow-by gas and the liquefied fuel flow into the catch tank 70 in the air cleaner 80 and are separated from each other in the catch tank 70. After the separation, the blow-by gas flows into the air cleaner 80 via the third air hole 77C formed in the catch tank 70, and is supplied to the intake path 30 together with the air in the air cleaner 80. Since the blow-by gas can be liquefied in the blow-by gas path 100 and the catch tank 70, the engine 40 can be prevented from being supplied with a large amount of blow-by gas at the same time. Therefore, the air-to-fuel ratio of the mixed gas supplied to the engine 40 is suppressed from being significantly deviated from the target value, and thus the level of performance of the engine 40 can be kept high. In addition, in the motorcycle 1 in this embodiment, at least a part of the blow-by gas is liquefied before flowing into the catch tank 70. Therefore, it is not necessary to liquefy a large amount of blow-by gas in the catch tank 70, which allows the capacity of the catch tank 70 to be reduced.

According to this embodiment, as shown in FIG. 3, the engine 40 includes the crankcase 44, and the cylinder section 46 located above crankcase 44. The air cleaner 80 is located rearward to the cylinder section 46. The entrance 102 of the blow-by gas path 100 is connected to the cylinder section 46. At least a part of the blow-by gas path 100 is located forward to the air cleaner 80. Since at least a part of the blow-by gas path 100 is located forward to the air cleaner 80, while the motorcycle 1 is running, air coming from the front hits at least a part of the blow-by gas path 100 without being blocked by the air cleaner 80. This makes it easier to liquefy the blow-by gas in the blow-by gas path 100.

According to this embodiment, as shown in FIG. 4, the exit 104 of the blow-by gas path 100 is located at the bottom end of the blow-by gas path 100. When the exit 104 of the blow-by gas path 100 is located at the bottom end thereof, the fuel liquefied in the blow-by gas path 100 easily flows toward the exit 104. Therefore, the liquefied fuel can be smoothly guided to the catch tank 70.

According to this embodiment, as shown in FIG. 4, the blow-by gas path 100 includes the vertical portion 115 extending in the vertical direction. When the blow-by gas path 100 includes the vertical portion 115, the liquefied fuel easily flows toward the exit 104 via the vertical portion 115. Therefore, the liquefied fuel can be smoothly guided to the catch tank 70.

According to this embodiment, as shown in FIG. 4, the intake path 30 includes the throttle body 36 having the throttle valve 38 built therein. The entrance 102 is located at a higher position than that of the top end of the throttle body 36, and the exit 104 is located at a lower position than that of the bottom end of the throttle body 36. In such a structure, since the level difference between the entrance 102 and the exit 104 of the blow-by gas path 100 is large, the fuel liquefied in the blow-by gas path 100 easily flows toward the exit 104. Therefore, the liquefied fuel can be smoothly guided to the catch tank 70.

According to this embodiment, as shown in FIG. 6, the air cleaner 80 has the front wall 92A, and a part of the catch tank 70 is defined by the front wall 92A. The front portion 84 of the air cleaner 80 is hit by the air coming from the front while the motorcycle 1 is running, and therefore is more easily cooled than the rear portion 86. Thus, by forming the catch tank 70 in the front portion 84 of the air cleaner 80, the blow-by gas is more easily liquefied in the catch tank 70.

According to this embodiment, as shown in FIG. 6, the air cleaner 80 has the connection opening 95 which is connected to the intake path 30. The catch tank 70 is formed below the connection opening 95. Since the catch tank 70 is provided at a relatively low position in the air cleaner 80, the fuel liquefied in the blow-by gas path 100 easily flows into the catch tank 70. In addition, the blow-by gas which has flown into the catch tank 70 easily flows into the air cleaner 80 via the third air hole 77C without being blocked by the liquefied fuel and then flows into the intake path 30 via the connection opening 95.

According to this embodiment, as shown in FIG. 6, the third air hole 77C of the catch tank 70 is formed above the exit 104. Owing to this, the blow-by gas which has flown into the catch tank 70 easily flows into the air cleaner 80 via the third air hole 77C without being blocked by the liquefied fuel.

According to this embodiment, as shown in FIG. 6, the length of the catch tank 70 in the vertical direction is longer than the length thereof in the front-rear direction. Since the catch tank 70 is longer in the vertical direction, the blow-by gas and the liquefied fuel are easily separated from each other in the catch tank 70.

According to this embodiment, as shown in FIG. 5, the air cleaner 80 includes the front portion 84, and the rear portion 86 longer than the front portion 84 in the width direction. The catch tank 70 is formed in the front portion 84. Since the capacity of the catch tank 70 can be relatively small, the catch tank 70 can be formed in the front portion 84, which has a relatively small width among the portions of the air cleaner 80. In addition, since the air cleaner 80 has the rear portion 86 having a large width, the air cleaner 80 can have a sufficient capacity with certainty.

According to this embodiment, as shown in FIG. 5, the upper main frame member 5A is located lateral to the front portion 84 and forward to the rear portion 86. A part of the blow-by gas path 100 is located forward to the upper main frame member 5A. Owing to this, air coming from the front easily hits a part of the blow-by gas path 100 without being blocked by the upper main frame member 5A.

According to this embodiment, the blow-by gas path 100 includes the vertical portion 115 extending in the vertical direction. The vertical portion 115 is located forward to, or obliquely forward to, the upper main frame member 5A. Owing to this, air coming from the front easily hits the vertical portion 115 of the blow-by gas path 100 without being blocked by the upper main frame member 5A. Therefore, the blow-by gas is easily liquefied in the vertical portion 115. The liquefied fuel smoothly flows into the catch tank 70 via the vertical portion 115.

According to this embodiment, as shown in FIG. 5, as seen in a plan view of the motorcycle 1, the blow-by gas path 100 first extends rearward from the engine 40 and then is bent in a lateral direction in front of the upper main frame member 5A. Owing to this, the blow-by gas path 100 can have a sufficient length with certainty, and air easily hits the blow-by gas path 100. Therefore, the blow-by gas is easily liquefied in the blow-by gas path 100.

### (Second Embodiment)

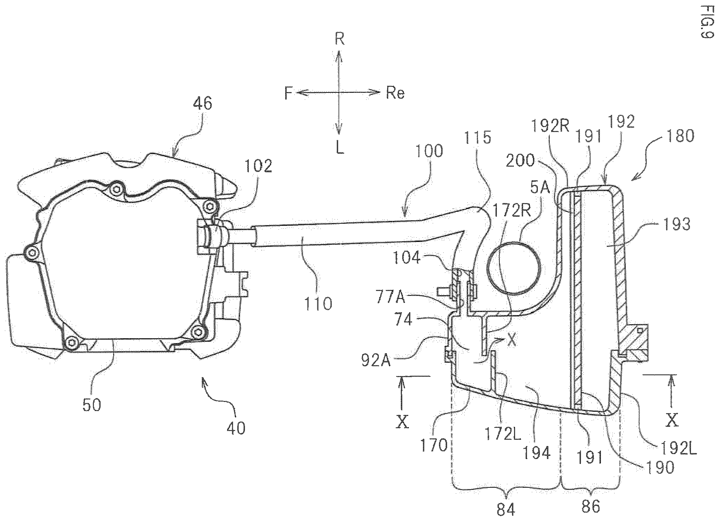

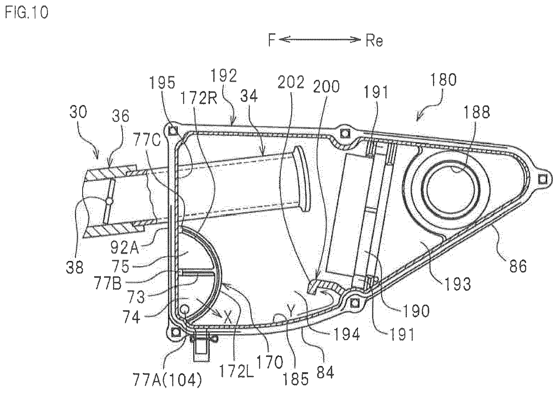

FIG. 9 is a plan view with a partial cross-sectional view showing a structure of the blow-by gas path 100 and members in the vicinity thereof in Embodiment 2. FIG. 10 is a cross-sectional view of FIG. 9 taken along line X-X in FIG. 9, and shows an air cleaner 180 and the intake path 30 in Embodiment 2. In FIG. 9 and FIG. 10, members having the same functions and effects as those in Embodiment 1 bear identical reference numerals thereto, and descriptions thereof will be omitted.

As shown in FIG. 9, a case 192 of the air cleaner 180 is formed by assembling a left case 192L and a right case 192R. A catch tank 170 is built in the case 192. The catch tank 170 is formed by assembling a part of the left case 192L and a part of the right case 192R. An inner wall 172R of the right case 192R is located forward to an inner wall 172L of the left case 192L, and there is a gap between the inner wall 172R and the inner wall 172L. As seen from the front of the vehicle, the inner wall 172R and the inner wall 172L partially overlap each other. The inner wall 172L of the left case 192L may be located forward to the inner wall 172R of the right case 192R. As seen from the front of the vehicle, the inner wall 172R and the inner wall 172L may not partially overlap each other, and a gap may be formed between the inner wall 172R and the inner wall 172L.

The air cleaner 180 includes an element 190. The element 190 is located rearward to the catch tank 170. The element 190 partitions the inside of the case 192 into a first chamber 193 and a second chamber 194. As shown in FIG. 10, an air intake opening 188 for sucking the air outside the air cleaner 180 is formed in the first chamber 193. A connection opening 195 connected to the intake path 30 is formed in the second chamber 194.

In this embodiment, the element 190 is attached to a sealing member 191. The sealing member 191 covers the entirety of a circumferential surface of the element 190. The sealing member 191 is fit into an engaging portion (not shown) provided in the case 192, and thus the element 190 is attached to an inner surface of the case 192. The sealing member 191 seals the first chamber 193 and the second chamber 194 against each other to prevent the air in the first chamber 193 from directly flowing into the second chamber 194 without passing the element 190.

As shown in FIG. 10, an inner wall 185 of the case 192 is provided with a projection 200 located between the catch tank 170 and the element 190. The projection 200 is located at a lower position than that of the connection opening 195. The projection 200 is formed to extend in the width direction of the vehicle (see FIG. 9). The projection 200 is formed to extend from a left wall to a right wall of the case 192, namely, from an inner wall of the left case 192L to an inner wall of the right case 192R. At least a part of the projection 200 is located below a bottom end of the sealing member 190. At least a part of the projection 200 is located below a bottom end of the sealing member 191. The projection 200 is formed to project obliquely forward and upward from the inner wall 185 of the case 192. A front end 202 of the projection 200 is formed to project downward. The projection 200 may be formed integrally with the case 192, or a separate member may be attached as the projection 200 to the inner wall 185 of the case 192. The projection 200 is not limited to having the above-described shape, and may have any shape which prevents the liquefied fuel from contacting the element 190 or the sealing member 191.

A motorcycle using, as fuel, alcohol such as ethanol or the like (e.g., fuel having a ratio of ethanol of 100%) may have a structure in which the blow-by gas flowing in the crankcase 44 and the cylinder section 46 is returned to the catch tank 170 in the air cleaner 180 and the blow-by gas and the liquefied fuel (typically, containing a large amount of water) are separated from each other as in this embodiment. When this structure is adopted, the liquefied fuel separated from the blow-by gas in the catch tank 170 flows into the second chamber 194 of the case 192 via the gap between the inner wall 172R and the inner wall 172R of the catch tank 170 as represented by arrow X in FIG. 9 and arrow X in FIG. 10, and is stored in the second chamber 194. While the motorcycle 1 is running, especially at the time of acceleration or deceleration, a liquid surface of the liquefied fuel stored in the second chamber 194 largely swings. As a result, the liquefied fuel may contact the element 190 or the sealing member 191 located in the case 192.

When the liquefied fuel contacts the element 190 or the sealing member 191, the element 190 may be clogged or the sealability of sealing member 191 may be lowered. However, the air cleaner 180 in this embodiment includes the projection 200. The projection 200 prevents the movement of the liquefied fuel stored in the second chamber 194. Namely, even when the liquefied fuel moves rearward in the vehicle while the motorcycle 1 is running, the liquefied fuel is prevented from moving beyond the projection 200 and thus contacting the element 190 or the sealing member 191 as represented by arrow Y in FIG. 10.

According to this embodiment, the air cleaner 180 includes the case 192 having the catch tank 170 built therein, the element 190 located rearward to the catch tank 170 for partitioning the inside of the case 192 into the first chamber 193 and the second chamber 194, the air intake opening 188 formed in the first chamber 193 of the case 192 for sucking the air outside the air cleaner 180 into the first chamber 193, and the connection opening 195 formed in the second chamber 194 of the case 192 and connected to the intake path 30. The inner wall 185 of the case 192 is provided with the projection 200 which is located between the catch tank 170 and the element 190 and located at a lower position than that of the connection opening 195. The projection 200 extends in the width direction of the vehicle. In this structure, since the inner wall 185 of the case 192 is provided with the projection 200 extending in the width direction of the vehicle, even when the liquefied fuel or the like flows into the case 192 from the catch tank 170, the fuel or the like can be prevented from contacting the element 190 or the like.

According to this embodiment, at least a part of the projection 200 is located below the bottom end of the element 190. Owing to this, even when the liquefied fuel or the like flows into the case 192 from the catch tank 170, the fuel or the like can be prevented from contacting the element 190 or the like more effectively.

According to this embodiment, the projection 200 is formed to project obliquely forward and upward from the inner wall 185 of the case 192. Owing to this, even when the liquefied fuel or the like flows into the case 192 from the catch tank 170, the fuel or the like can be prevented from contacting the element 190 or the like more effectively.

According to this embodiment, the front end 202 of the projection 200 is formed to project downward. Owing to this, even when the liquefied fuel or the like flows into the case 192 from the catch tank 170, the fuel or the like can be prevented from contacting the element 190 or the like more effectively.

As described in the above embodiments, fuel containing alcohol has a property of vaporizing at once when the temperature thereof reaches a certain temperature. Therefore, when fuel containing alcohol is used, a large amount of blow-by gas is likely to flow from the engine 40 at the same time. Thus, when fuel containing alcohol is used, the above-described effect is exerted more effectively.

### Reference Signs List

- 1: Motorcycle (saddle-type vehicle)
- 5A: Upper main frame member
- 30: Intake path
- 32: First intake pipe
- 34: Second intake pipe
- 36: Throttle body
- 38: Throttle valve
- 40: Engine
- 44: Crankcase
- 46: Cylinder section
- 70: Catch tank (tank)
- 74: First catch chamber
- 75: Second catch chamber
- 77A: First air hole
- 77C: Third air hole
- 80: Air cleaner
- 84: Front portion
- 86: Rear portion
- 92A: Front wall
- 100: Blow-by gas path
- 102: Entrance
- 104: Exit
- 110: Breather hose
- 115: Vertical portion
- 170: Catch tank (tank)
- 180: Air cleaner
- 190: Element
- 192: Case
- 200: Projection

## Claims

1. A saddle-type vehicle, comprising
an engine (40);
an intake path (30) connected to the engine (40);
an air cleaner (180) connected to the intake path (30);
a tank (170) provided in the air cleaner (180) and having a hole formed therein; and
a blow-by gas path (100) having an entrance (102) connected to the engine (40) and an exit (104) connected to the tank (170), and allowing blow-by gas containing fuel and oil to flow therein;
wherein:
the blow-by gas path (100) is exposed to outside air; and
the air cleaner (180) includes:
a case (192) having the tank (170) built therein;
an air intake opening; and
a connection opening (195) connected to the intake path (30); and wherein:
the exit (104) is located at a lower position than that of the entrance (102) **characterized in that** the air cleaner (180) includes an element (190), located rearward to the tank (170), for partitioning the inside of the case (192) into a first chamber (193) and a second chamber (194), whereby the element (190) purifies the air passing the element (190); the air intake opening is formed in the first chamber (193) of the case (192) for sucking air outside the air cleaner (180) into the first chamber (193);
the connection opening (195) is formed in the second chamber (194) of the case (192); and
an inner wall (185) of the case (192) is provided with a projection (200) located between the tank (170) and the element (190), located at a lower position than that of the connection opening (195), and extending in a width direction of the saddle-type vehicle.

2. A saddle-type vehicle according to claim 1, wherein:
the engine (40) includes a crankcase (44) and a cylinder section (46) located above the crankcase (44);
the air cleaner (180) is located rearward to the cylinder section (46);
the entrance (102) of the blow-by gas path (100) is connected to the cylinder section (46); and
at least a part of the blow-by gas path (100) is located forward to the air cleaner (180).

3. A saddle-type vehicle according to claim 1, wherein the exit (104) is formed at a bottom end of the blow-by gas path (100).

4. A saddle-type vehicle according to claim 1, wherein the blow-by gas path (100) includes a vertical portion (115) extending in a vertical direction.

5. A saddle-type vehicle according to claim 1, wherein:
the intake path (30) includes a throttle body (36) having a throttle valve (38) built therein;
the entrance (102) is located at a higher position than that of a top end of the throttle body (36); and
the exit (104) is located at a lower position than that of a bottom end of the throttle body (36).

6. A saddle-type vehicle according to claim 1, wherein:
the air cleaner (180) has a front wall (92A); and
a part of the tank (170) is defined by the front wall (92A).

7. A saddle-type vehicle according to claim 1, wherein:
the tank (170) is formed below the connection opening (95; 195).

8. A saddle-type vehicle according to claim 1, wherein:
the air cleaner (180) includes a front portion (84) and a rear portion (86) having a larger width than that of the front portion (84); and
the tank (170) is formed in the front portion (84).

9. A saddle-type vehicle according to claim 8, wherein:
a frame member (5A) is located at a position which is lateral to the front portion (84) and forward to the rear portion (86); and
a part of the blow-by gas path (100) is located forward to the frame member (5A).

10. A saddle-type vehicle according to claim 9, wherein:
the blow-by gas path (100) includes a vertical portion (115) extending in a vertical direction; and
the vertical portion (115) is located forward to, or obliquely forward to, the frame member (5A).

11. A saddle-type vehicle according to claim 9, wherein as seen in a plan view of the saddle-type vehicle, the blow-by gas path (100) extends rearward from the engine (40) and then is bent in a lateral direction in front of the frame member (5A).

12. A saddle-type vehicle according to claim 1, wherein the fuel contains alcohol.

13. A saddle-type vehicle according to claim 1, wherein at least a part of the projection (200) is located below a bottom end of the element (190).

14. A saddle-type vehicle according to claim 1, wherein the projection (200) is formed to project obliquely forward and upward from the inner wall (185) of the case (192).

## Patentansprüche

1. Ein Fahrzeug vom Satteltyp, das folgende Merkmale aufweist:
einen Motor (40);
einen Einlassweg (30), der mit dem Motor (40) verbunden ist;
einen Luftreiniger (180), der mit dem Einlassweg (30) verbunden ist;
einen Tank (170), der in dem Luftreiniger (180) bereitgestellt ist und in dem ein Loch gebildet ist; und
einen Durchströmungsgasweg (100), bei dem ein Eingang (102) mit dem Motor (40) verbunden ist und ein Ausgang (104) mit dem Tank (170) verbunden ist, und der es ermöglicht, das Durchströmungsgas, das Kraftstoff und Öl enthält, darin strömt;
wobei:
der Durchströmungsgasweg (100) Außenluft ausgesetzt ist; und
der Luftreiniger (180) Folgendes umfasst:
ein Gehäuse (192), in dem der Tank (170) eingebaut ist;
eine Lufteinlassöffnung; und
eine Verbindungsöffnung (195), die mit dem Einlassweg (30) verbunden ist;
und wobei:
sich der Ausgang (104) an einer niedrigeren Position als der Eingang (102) befindet,
**dadurch gekennzeichnet, dass**
der Luftreiniger (180) ein Element (190), das sich in Bezug auf den Tank (170) rückwärtig befindet, zum Unterteilen des Inneren des Gehäuses (192) in eine erste Kammer (193) und eine zweite Kammer (194) umfasst, wodurch das Element (190) die Luft reinigt, die durch das Element (190) verläuft;
die Lufteinlassöffnung in der ersten Kammer (193) des Gehäuses (192) zum Saugen von Luft von außerhalb des Luftreinigers (180) in die erste Kammer (193) gebildet ist;
die Verbindungsöffnung (195) in der zweiten Kammer (194) des Gehäuses (192) gebildet ist; und
eine Innenwand (185) des Gehäuses (192) mit einem Vorsprung (200) versehen ist, der sich zwischen dem Tank (170) und dem Element (190) befindet, der sich an einer niedrigeren Position als die Verbindungsöffnung (195) befindet und der sich in einer Breitenrichtung des Fahrzeuges vom Satteltyp erstreckt.

2. Ein Fahrzeug vom Satteltyp gemäß Anspruch 1, bei dem:
der Motor (40) ein Kurbelgehäuse (44) und einen Zylinderbereich (46) umfasst, der sich oberhalb des Kurbelgehäuses (44) befindet;
sich der Luftreiniger (180) in Bezug auf den Zylinderbereich (46) rückwärtig befindet;
der Eingang (102) des Durchströmungsgasweges (100) mit dem Zylinderbereich (46) verbunden ist; und
sich zumindest ein Teil des Durchströmungsgasweges (100) in Bezug auf den Luftreiniger (180) vorgelagert befindet.

3. Ein Fahrzeug vom Satteltyp gemäß Anspruch 1, bei dem der Ausgang (104) an einem unteren Ende des Durchströmungsgasweges (100) gebildet ist.

4. Ein Fahrzeug vom Satteltyp gemäß Anspruch 1, bei dem der Durchströmungsgasweg (100) einen Vertikalabschnitt (115) umfasst, der sich in einer Vertikalrichtung erstreckt.

5. Ein Fahrzeug vom Satteltyp gemäß Anspruch 1, bei dem:
der Einlassweg (30) einen Drosselkörper (36) umfasst, in dem ein Drosselventil (38) eingebaut ist;
sich der Eingang (102) an einer höheren Position als ein oberes Ende des Drosselkörpers (36) befindet; und
sich der Ausgang (104) an einer niedrigeren Position als ein unteres Ende des Drosselkörpers (36) befindet.

6. Ein Fahrzeug vom Satteltyp gemäß Anspruch 1, bei dem:
der Luftreiniger (180) eine Vorderwand (92A) aufweist; und
ein Teil des Tanks (170) durch die Vorderwand (92A) definiert ist.

7. Ein Fahrzeug vom Satteltyp gemäß Anspruch 1, bei dem:
der Tank (170) unterhalb der Verbindungsöffnung (95; 195) gebildet ist.

8. Ein Fahrzeug vom Satteltyp gemäß Anspruch 1, bei dem:
der Luftreiniger (180) einen Vorderabschnitt (84) und einen Rückabschnitt (86) umfasst, der eine größere Breite als der Vorderabschnitt (84) aufweist; und
der Tank (170) in dem Vorderabschnitt (84) gebildet ist.

9. Ein Fahrzeug vom Satteltyp gemäß Anspruch 8, bei dem:
sich ein Rahmenbauglied (5A) an einer Position befindet, die lateral zu dem Vorderabschnitt (84) und in Bezug auf den Rückabschnitt (86) vorgelagert ist; und
sich ein Teil des Durchströmungsgasweges (100) in Bezug auf das Rahmenbauglied (5A) vorgelagert befindet.

10. Ein Fahrzeug vom Satteltyp gemäß Anspruch 9, bei dem:
der Durchströmungsgasweg (100) einen Vertikalabschnitt (115) umfasst, der sich in einer Vertikalrichtung erstreckt; und
sich der Vertikalabschnitt (115) in Bezug auf das Rahmenbauglied (5A) vorgelagert oder schräg vorgelagert befindet.

11. Ein Fahrzeug vom Satteltyp gemäß Anspruch 9, bei dem sich bei Betrachtung in einer Draufsicht des Fahrzeuges vom Satteltyp der Durchströmungsgasweg (100) rückwärtig von dem Motor (40) erstreckt und dann in einer Lateralrichtung vor dem Rahmenbauglied (5A) gebogen ist.

12. Ein Fahrzeug vom Satteltyp gemäß Anspruch 1, bei dem der Kraftstoff Alkohol enthält.

13. Ein Fahrzeug vom Satteltyp gemäß Anspruch 1, bei dem sich zumindest ein Teil des Vorsprunges (200) unterhalb eines unteren Endes des Elementes (190) befindet.

14. Ein Fahrzeug vom Satteltyp gemäß Anspruch 1, bei dem der Vorsprung (200) dazu gebildet ist, von der Innenwand (185) des Gehäuses (192) schräg nach vorn und nach oben hervorzustehen.

## Revendications

1. Véhicule de type à selle, comprenant
un moteur (40);
un trajet d'admission (30) connecté au moteur (40);
un filtre à air (180) connecté au trajet d'admission (30);
un réservoir (170) prévu dans le filtre à air (180) et présentant un trou y formé; et
un trajet de gaz de soufflage (100) présentant une entrée (102) connectée au moteur (40) et une sortie (104) connectée au réservoir (170), et permettant que le carburant et l'huile contenant du gaz de soufflage y circulent;
dans lequel:
le trajet de gaz de soufflage (100) est exposé à l'air extérieur; et
le filtre à air (180) comporte:
un boîtier (192) présentant le réservoir (170) y incorporé;
une ouverture d'admission d'air; et
une ouverture de connexion (195) connectée au trajet d'admission (30);
et dans lequel:
la sortie (104) est située à une position inférieure à celle de l'entrée (102), **caractérisé par le fait que**
le filtre à air (180) comporte un élément (190), situé à l'arrière du réservoir (170), destiné à diviser le boîtier (192) en une première chambre (193) et une deuxième chambre (194), l'élément (190) purifiant l'air passant par l'élément (190);
l'ouverture d'admission d'air est formée dans la première chambre (193) du boîtier (192) pour aspirer de l'air à l'extérieur du filtre à air (180) dans la première chambre (193);
l'ouverture de connexion (195) est formée dans la deuxième chambre (194) du boîtier (192); et
une paroi intérieure (185) du boîtier (192) est pourvue d'une saillie (200) située entre le réservoir (170) et l'élément (190), située à une position plus basse que celle de l'ouverture de connexion (195) et s'étendant dans le sens de la largeur du véhicule de type à selle.

2. Véhicule de type à selle selon la revendication 1, dans lequel:
le moteur (40) comporte un carter de vilebrequin (44) et un segment de cylindre (46) situé au-dessus du carter de vilebrequin (44);
le filtre à air (180) est situé vers l'arrière par rapport au segment de cylindre (46);
l'entrée (102) du trajet de gaz de soufflage (100) est connectée au segment de cylindre (46); et
au moins une partie du trajet de gaz de soufflage (100) est située vers l'avant par rapport au filtre à air (180).

3. Véhicule de type à selle selon la revendication 1, dans lequel la sortie (104) est formée à une extrémité inférieure du trajet de gaz de soufflage (100).

4. Véhicule de type à selle selon la revendication 1, dans lequel le trajet de gaz de soufflage (100) comporte une partie verticale (115) s'étendant dans une direction verticale.

5. Véhicule de type à selle selon la revendication 1, dans lequel:
le trajet d'admission (30) comporte un corps d'étranglement (36) présentant une soupape d'étranglement (38) y intégrée;
l'entrée (102) est située à une position plus élevée que celle d'une extrémité supérieure du corps d'étranglement (36); et
la sortie (104) est située à une position plus basse que celle d'une extrémité inférieure du corps d'étranglement (36).

6. Véhicule de type à selle selon la revendication 1, dans lequel:
le filtre à air (180) présente une paroi avant (92A); et
une partie du réservoir (170) est définie par la paroi avant (92A).

7. Véhicule de type à selle selon la revendication 1, dans lequel:
le réservoir (170) est formé au-dessous de l'ouverture de connexion (95; 195).

8. Véhicule de type à selle selon la revendication 1, dans lequel:
le filtre à air (180) comporte une partie avant (84) et une partie arrière (86) présentant une largeur supérieure à celle de la partie avant (84); et
le réservoir (170) est formé dans la partie avant (84).

9. Véhicule de type à selle selon la revendication 8, dans lequel:
un élément de châssis (5A) est situé à une position qui est latérale par rapport à la partie avant (84) et vers l'avant par rapport à la partie arrière (86); et
une partie du trajet de gaz de soufflage (100) est située vers l'avant par rapport à l'élément de châssis (5A).

10. Véhicule de type à selle selon la revendication 9, dans lequel:
le trajet de gaz de soufflage (100) comporte une partie verticale (115) s'étendant dans une direction verticale; et
la partie verticale (115) est située vers l'avant, ou obliquement vers l'avant, par rapport à l'élément de châssis (5A).

11. Véhicule de type à selle selon la revendication 9, dans lequel, tel que vu en vue en plan du véhicule de type à selle, le trajet de gaz de soufflage (100) s'étend vers l'arrière à partir du moteur (40) et est ensuite courbé dans une direction latérale face à l'élément de châssis (5A).

12. Véhicule de type à selle selon la revendication 1, dans lequel le carburant contient de l'alcool.

13. Véhicule de type à selle selon la revendication 1, dans lequel au moins une partie de la saillie (200) est située au-dessous d'une extrémité inférieure de l'élément (190).

14. Véhicule de type à selle selon la revendication 1, dans lequel la saillie (200) est formée de manière à ressortir obliquement vers l'avant et vers le haut de la paroi intérieure (185) du boîtier (192).
